# EUROPÄISCHE PATENTANMELDUNG

(11) **EP 3 689 749 A1**
(43) Veröffentlichungstag der Anmeldung: **05.08.2020**
(21) Anmeldenummer: 20151383.5
(22) Anmeldetag: 13.01.2020
(51) Int. Cl.: B64D 11/06

(54) **VERBINDUNGSVORRICHTUNG UND BEFESTIGUNGSSYSTEM ZUR BEFESTIGUNG EINES KABINENEINRICHTUNGSGEGENSTANDS EINER KABINE EINES LUFTFAHRZEUGS AN EINER BEFESTIGUNGSSCHIENE**

(30) Priorität: 31.01.2019 DE 102019201212
(71) Anmelder: Airbus Operations GmbH, 21129 Hamburg (DE)
(72) Erfinder: LINDE, Peter, 21129 Hamburg (DE); HEGENBART, Matthias, 21129 Hamburg (DE); BENTHIEN, Hermann, 21129 Hamburg (DE)
(74) Vertreter: Isarpatent

(57) **Zusammenfassung**

Eine Verbindungsvorrichtung zur Befestigung eines Kabineneinrichtungsgegenstands einer Kabine eines Luftfahrzeugs an einer Befestigungsschiene umfasst einen Basiskörper, welcher einen Befestigungszapfen zur Verbindung mit der Befestigungsschiene aufweist, einen Tragkörper mit einer Befestigungsstruktur zur Befestigung des Kabineneinrichtungsgegenstands, eine Führungseinrichtung, welche den Tragkörper und den Basiskörper aneinander koppelt, und eine zwischen dem Basiskörper und dem Tragkörper angeordnete Antriebsspindel, welche um eine sich in einer Längsrichtung erstreckende Rotationsachse drehbar gelagert ist. Die Antriebsspindel weist ein Außengewinde auf, welches mit einem an dem Basiskörper oder mit einem an dem Tragkörper ausgebildeten Innengewinde in Eingriff steht.

## Beschreibung

Die vorliegende Erfindung betrifft eine Verbindungsvorrichtung zur Befestigung eines Kabineneinrichtungsgegenstands einer Kabine eines Luftfahrzeugs an einer Befestigungsschiene. Ferner betrifft die Erfindung ein Befestigungssystem mit einer solchen Verbindungsvorrichtung sowie ein Luftfahrzeug.

Im Rumpf eines Luftfahrzeugs ist üblicherweise ein ebener Boden vorgesehen, welcher eine Passagierkabine, einen Frachtraum oder allgemein eine Kabine begrenzt. Typischerweise wird eine Kabinenmöblierung des Luftfahrzeugs, wie z.B. Passagiersitze, Sitze für die Kabinenbesatzung, Trennwände und Bordtoiletten oder andere sogenannte Kabinenmonumente, am Boden verankert. In der Regel sind hierzu an dem Boden Befestigungsschienen vorgesehen, an welchen die Kabineneinrichtungsgegenstände mittels Verbindungsvorrichtungen befestigt sind.

Die Befestigungsschienen weisen typischerweise eine Vielzahl von Öffnungen auf, welche in jeweils gleichen Abständen zueinander entlang der Längserstreckung der Befestigungsschiene verteilt sind. In eine jeweilige Öffnung wird ein an der Verbindungsvorrichtung vorgesehener Befestigungszapfen eingeführt und in einem zwischen zwei aufeinanderfolgenden Öffnungen gelegenen Schlitz befestigt.

Auf diese Weise können z.B. Passagiersitze innerhalb der Passagierkabine als entlang der Befestigungsschiene hintereinander angeordnete Sitzreihen montiert werden. Ein Abstand zwischen den Reihen ist hierbei als ein ganzzahliges Vielfaches des Abstand zwischen den einzelnen Öffnungen der Befestigungsschiene festlegbar.

Vor diesem Hintergrund beschreibt die EP 1 480 874 B1 ein Befestigungssystem mit einer Befestigungsschiene, welche eine Vielzahl von in jeweils gleichen Abständen zueinander gelegenen Öffnungen aufweist, und mit einer mittels eines Gleitkörpers an die Befestigungsschiene gekoppelten Verbindungsvorrichtung. Um eine automatisierte Verstellung des Abstands zwischen den Sitzen benachbarter Sitzreihen durchführen zu können, ist an der Verbindungsvorrichtung ein über ein Schneckenrad angetriebenes Antriebszahnrad angeordnet, welches in eine an der Befestigungsschiene vorgesehenen Zahnstange eingreift. In ähnlicher Weise beschreibt die US 2015/0145300 A1 eine Verschiebung der gesamten an der Befestigungsschiene geführten Verbindungseinrichtung entlang der Befestigungsschiene mittels eines Zahnrads, welches zu den Öffnungen der Befestigungsschiene korrespondierend ausgebildete Zähne aufweist, die mit den Öffnungen direkt in Eingriff stehen.

Es ist Aufgabe der vorliegenden Erfindung, ein verbessertes Befestigungskonzept zur Befestigung von Kabineneinrichtungsgegenständen am Boden einer Kabine eines Luftfahrzeugs bereitzustellen.

Diese Aufgabe wird jeweils durch die Gegenstände der unabhängigen Ansprüche gelöst.

Vorteilhafte Ausgestaltungen und Weiterbildungen ergeben sich aus den auf die unabhängigen Ansprüche rückbezogenen Unteransprüchen in Verbindung mit der Beschreibung.

Nach einem ersten Aspekt der Erfindung ist eine Verbindungsvorrichtung zur Befestigung eines Kabineneinrichtungsgegenstands einer Kabine eines Luftfahrzeugs an einer Befestigungsschiene vorgesehen. Die Verbindungsvorrichtung weist einen Basiskörper, welcher einen Befestigungszapfen zur Verbindung mit der Befestigungsschiene aufweist, und einen Tragkörper mit einer Befestigungsstruktur bzw. Montagestruktur zur Befestigung des Kabineneinrichtungsgegenstands auf. Die Verbindungsvorrichtung umfasst ferner eine Führungseinrichtung, welche den Tragkörper und den Basiskörper aneinander koppelt, und eine zwischen dem Basiskörper und dem Tragkörper angeordnete Antriebsspindel, welche um eine sich in einer Längsrichtung erstreckende Rotationsachse drehbar gelagert ist. Die Antriebsspindel weist ein Außengewinde auf, welches mit einem an dem Basiskörper oder mit einem an dem Tragkörper ausgebildeten Innengewinde in Eingriff steht.

Die erfindungsgemäße Verbindungsvorrichtung weist demnach einen zur Befestigung an der Schiene vorgesehenen Basiskörper und einen mittels einer um eine Rotationsachse drehbaren Antriebsspindel relativ zu dem Basiskörper bewegbaren Tragkörper auf, wobei der Tragkörper und der Basiskörper über eine Führungseinrichtung aneinander gekoppelt sind. Die Führungseinrichtung kann hierbei an dem Tragkörper oder an dem Basiskörper befestigt sein und sorgt für eine ortsfeste Anordnung von Tragkörper und Basiskörper zueinander in Bezug auf eine Hochrichtung. Die Führungseinrichtung führt die Relativbewegung zwischen Trag- und Basiskörper insbesondere in einer Längsrichtung. Die Spindel ist in Bezug auf die Hochrichtung zwischen dem Basiskörper und dem Tragkörper angeordnet und erstreckt sich mit der Rotationsachse in der Längsrichtung. Die Antriebsspindel weist ein Außengewinde auf, das in Eingriff mit einem Innengewinde steht. Das Innengewinde kann entweder an dem Tragkörper ausgebildet sein, wobei die Antriebsspindel dann in Bezug auf die Längsrichtung ortsfest zu dem Basiskörper gelagert ist. Alternativ hierzu kann das Innengewinde an dem Basiskörper ausgebildet sein, wobei die Antriebsspindel dann in Bezug auf die Längsrichtung ortsfest zu dem Tragkörper gelagert ist. Durch Drehen der Antriebsspindel um die Rotationsachse sind der Tragkörper und der Basiskörper relativ zueinander bewegbar. Auf diese Weise kann eine einfache Verstellung der Position des Tragkörpers unabhängig von einem Abstand von Befestigungsöffnungen einer Befestigungsschiene, an welcher der Basiskörper durch den Zapfen befestigbar ist, erfolgen. Dadurch wird eine Vergrößerung der Flexibilität bei der Anordnung von Kabineneinrichtungsgegenständen wie Passagier- oder Besatzungssitze, Trennwände oder andere Kabinenmonumente entlang einer Befestigungsschiene erzielt.

Die Verstellung über eine Antriebsspindel, welche mit einem Außengewinde in ein an dem Basiskörper oder dem Tragkörper ausgebildetes Innengewinde eingreift, bietet darüber hinaus den Vorteil, dass dadurch eine selbsthemmende kinematische Kopplung erfolgt, so dass eine Sicherung zur Verhinderung einer Relativbewegung zwischen Tragkörper und Basiskörper vereinfacht oder überflüssig wird.

Durch die Anordnung der Antriebsspindel zwischen dem Basiskörper und dem Tragkörper wird zudem ein sehr kompakter Aufbau der Verbindungsvorrichtung erzielt.

Gemäß einem zweiten Aspekt der Erfindung ist ein Befestigungssystem für eine Kabine eines Luftfahrzeugs vorgesehen. Das Befestigungssystem weist eine sich in einer Schienenlängsrichtung erstreckende Befestigungsschiene auf, welche eine Vielzahl von in der Schienenlängsrichtung gleichmäßig zueinander beabstandeter Öffnungen aufweist, wobei zwischen zwei aufeinander folgenden Öffnungen jeweils ein Befestigungsschlitz ausgebildet ist. Ferner umfasst das Befestigungssystem eine Verbindungsvorrichtung gemäß dem ersten Aspekt der Erfindung, wobei der Befestigungszapfen des Tragkörpers über eine der Öffnungen der Befestigungsschiene in einen diese Öffnung mit einer weiteren Öffnung verbindenden Befestigungsschlitz einführbar ist. Wenn der Befestigungszapfen des Tragkörpers in dem Befestigungsschlitz angeordnet und formschlüssig darin gehalten ist, erstreckt sich die Rotationsachse der Antriebsspindel vorzugsweise entlang der Schienenlängsrichtung.

Gemäß einem dritten Aspekt der Erfindung ist ein Luftfahrzeug mit einem Befestigungssystem gemäß dem zweiten Aspekt der Erfindung vorgesehen, wobei die Befestigungsschiene an einem Boden einer Kabine des Luftfahrzeugs angebracht ist.

Gemäß einer Ausführungsform der Verbindungsvorrichtung weist die Antriebsspindel an einem ersten Ende ein Anschlussprofil zum Anschluss eines Drehwerkzeugs auf. Demnach ist an einem in Bezug auf die Längsrichtung stirnseitigen Ende der Antriebsspindel ein Anschlussprofil vorgesehen, welches einen Querschnitt zum Eingriff mit einem Drehwerkzeug definiert. Der Querschnitt ist nicht-kreisförmig ausgebildet, um eine Kraftübertragung von dem Drehwerkzeug, wie z.B. einem Schraubenschlüssel, auf die Antriebsspindel zum Drehen der Spindel um die Rotationsachse zu ermöglichen. Das Anschlussprofil bietet den Vorteil, dass eine Antriebseinrichtung wie ein Drehwerkzeug von der Verbindungsvorrichtung lösbar ist.

Optional ist das Anschlussprofil als Vertiefung ausgebildet. Demnach kann das Anschlussprofil durch den Innenumfang einer stirnseitigen Ausnehmung an der Antriebsspindel realisiert sein. Dadurch wird der Platzbedarf für das Anschlussprofil reduziert bzw. das Anschlussprofil kann mit kleinem Durchmesser realisiert werden, wodurch dessen Zugänglichkeit für das Drehwerkzeug verbessert wird. Beispielsweise kann das Anschlussprofil in Form eines Innensechskants realisiert werden.

Gemäß einer weiteren Ausführungsform weist die Verbindungsvorrichtung eine von der Antriebsspindel lösbare Sicherungseinrichtung auf, welche die Antriebsspindel drehfest mit dem Basiskörper oder dem Tragkörper koppelt. Durch die Sicherung der Antriebsspindel gegen eine Drehung um die Roationsachse wird eine zusätzliche Sicherung gegen ungewolltes Verschieben von Basiskörper und Tragkörper relativ zueinander bereitgestellt. Beispielsweise kann ein Bügel vorgesehen sein, der ein erstes profiliertes Ende mit einem zu dem Anschlussprofil der Antriebsspindel korrespondierenden Querschnitt und ein zweites Ende aufweist, welches an dem Basiskörper oder dem Tragkörper anbringbar ist, z.B. über eine Verrastung oder dergleichen.

Gemäß einer weiteren Ausführungsform der Verbindungsvorrichtung kann der Tragkörper als Befestigungsstruktur eine oder mehrere der folgenden Strukturen aufweisen: einen Bolzen, einen Gewindestift, eine Aufnahmebohrung, eine Hülse, eine Rasteinrichtung, eine Klemmeinrichtung. Allgemein ist die Befestigungsstruktur zur Verbindung mit einem Kabineneinrichtungsgegenstand eingerichtet.

Gemäß einer weiteren Ausführungsform der Verbindungsvorrichtung ist vorgesehen, dass der Befestigungszapfen des Basiskörpers einen Schaft und eine Kopf, der einen größeren Durchmesser als der Schaft aufweist, umfasst. Der Befestigungszapfen ist demnach als Kopfbolzen ausgeführt. Dies erleichtert vorteilhaft die Montage an einer Befestigungsschiene.

Gemäß einer weiteren Ausführungsform der Verbindungsvorrichtung weist die Führungseinrichtung ein Führungsprofil mit einer sich entlang der Längsrichtung erstreckenden Führungsfläche auf, wobei das Führungsprofil an dem Tragkörper oder dem Basiskörper befestigt ist und die Führungsfläche des Führungsprofils an einer zweiten Führungsfläche des jeweils anderen von Basiskörper und Tragkörpers anliegt. Wenn das Führungsprofil an dem Tragkörper befestigt ist, liegt die erste Führungsfläche an einer an dem Basiskörper vorgesehenen zweiten Führungsfläche an. Wenn das Führungsprofil an dem Basiskörper befestigt ist, liegt die erste Führungsfläche an einer an dem Tragkörper vorgesehenen zweiten Führungsfläche an.

Das Führungsprofil kann beispielsweise als L-förmiges Profil ausgebildet sein, welches einen sich entlang der Hochrichtung erstreckenden langen Schenkel und einen sich quer zu diesem erstreckenden kurzen Schenkel aufweist, an dem die erste Führungsfläche ausgebildet ist. Auf diese Weise kann der kurze Schenkel den Tragkörper oder den Basiskörper an der dort vorgesehenen zweite Führungsfläche hintergreifen.

Gemäß einer Ausführungsform des Luftfahrzeugs ist der Basiskörper der Verbindungsvorrichtung in dem Befestigungsschlitz der Befestigungsschiene befestigt, beispielsweise formschlüssig darin gehalten, wobei ein Kabineneinrichtungsgegenstand an der Befestigungsstruktur des Tragkörpers der Verbindungsvorrichtung befestigt ist. Beispielsweise können in einer Passagierkabine zwei parallele Befestigungsschienen am Boden der Kabine angeordnet sein, wobei entlang der Schienenlängsrichtung nacheinander mehrere Passagiersitze über mehrere Verbindungseinrichtung an der Befestigungsschiene befestigt sind. Ein gewünschter Abstand zwischen den Passagiersitzen ist hierbei auf einfache Weise durch Drehen der Antriebsspindel stufenlos einstellbar. Insbesondere kann ein Abstand zwischen den Passagiersitzen in kleineren Schrittweiten eingestellt werden, als dies durch die Abstände der Öffnungen der Befestigungsschiene vorgegeben ist.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner gleich 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine schematische Schnittansicht einer Verbindungsvorrichtung gemäß einem Ausführungsbeispiel der vorliegenden Erfindung;
- Fig. 2: eine schematische Schnittansicht der in Fig. 1 gezeigten Verbindungsvorrichtung, die sich bei einem Schnitt entlang der in Fig. 1 gezeigten Linie X-X ergibt, wobei die Verbindungsvorrichtung als Teil eines Befestigungssystems gemäß einem Ausführungsbeispiel der vorliegenden Erfindung dargestellt ist;
- Fig. 3: in Ansicht (A) eine Draufsicht auf eine Befestigungsschiene eines Befestigungssystems gemäß einem Ausführungsbeispiel der vorliegenden Erfindung und in Ansicht (B) eine Schnittansicht der Schiene, die sich bei einem Schnitt entlang der in Ansicht (A) dargestellten Linie Y-Y ergibt;
- Fig. 4: die Verbindungseinrichtung aus Fig. 1, wobei ein Tragkörper der Verbindungseinrichtung relativ zu einem Basiskörper der Verbindungseinrichtung entlang einer Längsrichtung verschoben wurde;
- Fig. 5: eine schematische Schnittansicht einer Verbindungsvorrichtung gemäß einem weiteren Ausführungsbeispiel der vorliegenden Erfindung;
- Fig. 6: eine schematische Darstellung einer Schnittansicht einer Kabine eines Luftfahrzeugs mit einem Befestigungssystem gemäß einem Ausführungsbeispiel der vorliegenden Erfindung; und
- Fig. 7: in Ansicht (A) eine Schnittdarstellung einer Kabine eines Luftfahrzeugs in einer Draufsicht auf den Boden der Kabine in mit einer ersten Anordnung von Kabineneinrichtungsgegenständen und in Ansicht (B) eine Schnittdarstellung der Kabine in einer Draufsicht auf den Boden mit einer zweiten Anordnung von Kabineneinrichtungsgegenständen.

In den Figuren bezeichnen dieselben Bezugszeichen gleiche oder funktionsgleiche Komponenten, soweit nichts Gegenteiliges angegeben ist.

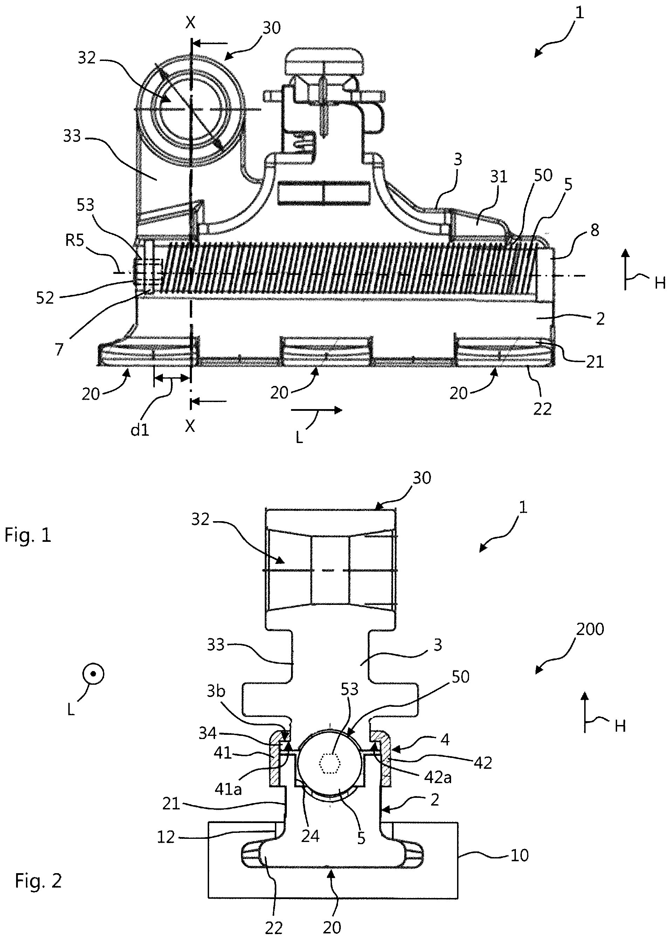

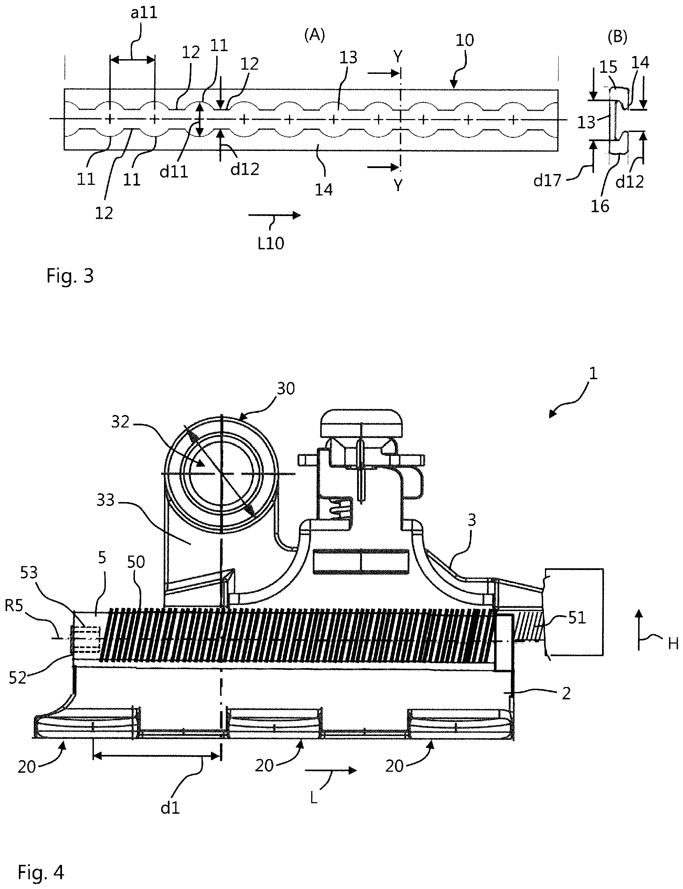

Die Fign. 1, 2, 4 und 5 zeigen jeweils beispielhaft eine Verbindungsvorrichtung 1 zur Befestigung eines Kabineneinrichtungsgegenstands K einer Kabine 105 eines Luftfahrzeugs 100, wie z.B. eines Passagiersitzes, an einer Befestigungsschiene 10. In Fig. 2 ist die in Fig. 1 dargestellte Verbindungseinrichtung 1 als Teil eines Befestigungssystems 200 für eine Kabine 105 eines Luftfahrzeugs 100 zur Befestigung des Kabineneinrichtungsgegenstands K dargestellt. Fig. 3 zeigt beispielhaft eine Befestigungsschiene 10 des Befestigungssystems 200.

Die in Fig. 1 beispielhaft dargestellte Verbindungseinrichtung 1 weist einen Basiskörper 2, einen Tragkörper 3, eine Führungseinrichtung 4 und eine Antriebsspindel 5 auf.

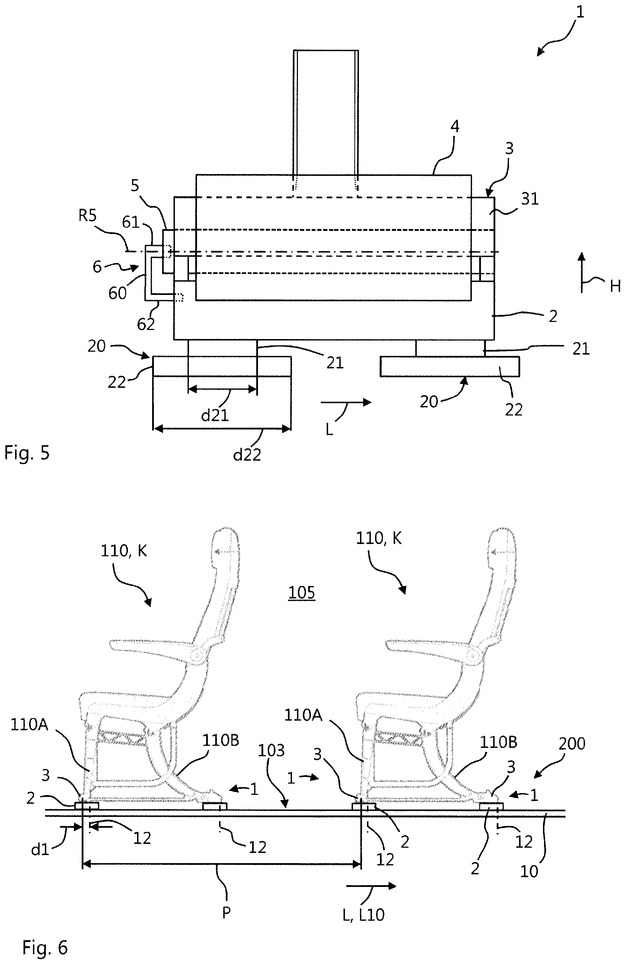

Der Basiskörper 2 ist zur Befestigung an der Befestigungsschiene 10 vorgesehen. Wie insbesondere in den Fign. 1 und 2 erkennbar ist, kann der Basiskörper 2 insbesondere einen blockförmigen Basisabschnitt 23 und zumindest einen Befestigungszapfen 20 aufweisen, der in Bezug auf eine Hochrichtung H von dem Basisabschnitt 23 vorspringt. Wie in den Fign. 2 und 5 beispielhaft dargestellt ist, kann der Befestigungszapfen 20 insbesondere als Kopfbolzen mit einem Schaft 21 mit einem ersten Durchmesser d21 und einem Kopf 22 mit einem zweiten Durchmesser d22, der einen größer als der erste Durchmesser d21 ist, ausgebildet sein. Der Befestigungszapfen 20 dient zur Befestigung des Basiskörpers 2 an der Befestigungsschiene 10, wie dies nachfolgend noch im Detail erläutert wird. Der in den Fign. 1 und 4 beispielhaft dargestellte Basiskörper 2 weist drei Befestigungszapfen 20 auf. Der in Fig. 5 beispielhaft dargestellte Basiskörper 2 weist zwei Befestigungszapfen 20 auf.

Wie in Fig. 2 beispielhaft dargestellt ist, kann der Basisabschnitt 23 des Basiskörpers 23 ferner eine sich in einer Längsrichtung L erstreckende Längsnut oder Längsausnehmung 24 aufweisen, welche in Bezug auf die Hochrichtung H entgegengesetzt zu dem Befestigungszapfen 20 angeordnet ist.

Der Tragkörper 3 ist zur Kopplung an den jeweiligen Kabineneinrichtungsgegenstand K vorgesehen. Hierzu weist der Tragkörper 3 eine Befestigungsstruktur 30 auf. Die Befestigungsstruktur 30 kann insbesondere einstückig mit einem Basisabschnitt 31 des Tragkörpers 3 ausgebildet sein. Wie in Fig. 1 beispielhaft dargestellt ist, kann der Basisabschnitt 31 des Tragkörpers 3 allgemein als Formteil ausgebildet sein, dessen spezifische Struktur vom jeweiligen Verwendungszweck abhängt, insbesondere davon, welche Art von Kabineneinrichtungsgegenstand K befestigt werden soll. In Fig. 5 ist der Basisabschnitt 31 des Tragkörpers 3 beispielhaft als blockförmiges Bauteil dargestellt.

Die Befestigungsstruktur 30 kann beispielsweise, wie dies in den Fign. 1 und 2 dargestellt ist, durch eine Aufnahmebohrung 32 realisiert, die an einer in der Hochrichtung H von dem Basisabschnitt 31 vorstehenden Rippe 33 ausgebildet ist. Fig. 5 zeigt beispielhaft eine als Gewindestift ausgebildete Befestigungsstruktur 30. Der Gewindestift kann insbesondere, wie in Fig. 5 beispielhaft dargestellt, in der Hochrichtung H von dem Basisabschnitt 31 vorstehen. Die Befestigungsstuktur 30 kann ferner auch durch einen Bolzen, eine Hülse, eine Rasteinrichtung, eine Klemmeinrichtung oder in ähnlicher Weise realisiert sein. Der Tragkörper 31 kann auch mehrere in gleicher Weise oder verschieden voneinander realisierte Befestigungsstrukturen 30 aufweisen.

Die Führungseinrichtung 4 koppelt den Tragkörper 3 und den Basiskörper 2 aneinander, insbesondere in Bezug auf die Hochrichtung H. In Fig. 2 ist beispielhaft eine Führungseinrichtung 4 dargestellt, welche an dem Basiskörper 2 befestigt ist und welche den Basiskörper 2 in der Längsrichtung L gleitend führt. Selbstverständlich ist auch denkbar, die Führungseinrichtung 4 an dem Trägerkörper 3 zu befestigen und den Basiskörper 2 gleitend an der Führungseinrichtung 4 zu lagern. Die Führungseinrichtung 4 kann mit dem Basiskörper 2 oder dem Tragkörper 3 beispielsweise verschraubt, verklebt, verschweißt, verrastet oder in ähnlicher Weise daran befestigt sein.

Wie in Fig. 2 beispielhaft dargestellt ist, kann die die Führungseinrichtung 4 insbesondere ein erstes Führungsprofil 41 und zweites Führungsprofil 42 aufweisen. Grundsätzlich ist auch denkbar, die Führungseinrichtung 4 mit nur einem Führungsprofil 41 zu realisieren. Die Führungsprofile 41, 42 erstrecken sich jeweils in der Längsrichtung L und sind einander gegenüberliegend angeordnet, wie in Fig. 2 beispielhaft gezeigt. Wie in Fig. 2 erkennbar, können die Führungsprofile 41, 42 jeweils einen L-förmigen Querschnitt aufweisen, wobei ein erster Schenkel des jeweiligen Führungsprofils 41, 42 sich in der Hochrichtung H erstreckt und an dem Basiskörper 2 befestigt ist und ein sich quer zu dem ersten Schenkel erstreckender zweiter Schenkel des jeweiligen Führungsprofils 41, 42 einen sich in der Längsrichtung L erstreckenden Führungsabschnitt 34 des Tragkörpers 3 hintergreift. Bei der in Fig. 2 beispielhaft dargestellten Führungseinrichtung 4 ist an den zweiten Schenkeln der Führungsprofile 41, 42 ist jeweils eine erste Führungsfläche 41a, 42a vorgesehen, die sich entlang der Längsrichtung L erstreckt und dem Basiskörper 2 zugewandt orientiert ist. An dem Führungsabschnitt 34 des Tragkörpers 3 ist eine zweite Führungsfläche 3b vorgesehen, welche in Kontakt mit der jeweiligen ersten Führungsfläche 41a, 42a ist.

Die in Fig. 2 dargestellte Führungseinrichtung 4 zeigt rein beispielhaft eine mögliche Realisierung mit L-förmigen Führungsprofilen 41, 42, die an dem Basiskörper 2 befestigt sind. Selbstverständlich können die Führungsprofile 41, 42 auch an dem Tragkörper 3 befestigt sein und die zweite Führungsfläche kann an dem Basiskörper 2 ausgebildet sein. Allgemein weisen die Führungsprofile 41, 42 jeweils eine sich entlang der Längsrichtung L erstreckende ersten Führungsfläche 41a, 42a auf, wobei das Führungsprofil 41, 42 an dem Tragkörper 3 oder dem Basiskörper 2 befestigt ist und die erste Führungsfläche 41a; 42a des Führungsprofils 41, 42 an einer zweiten Führungsfläche des jeweils anderen von Basiskörper 2 und Tragkörper 3 anliegt.

Die Antriebsspindel 5 ist als Gewindespindel mit einem Außengewinde 50 realisiert, wie dies insbesondere in Fig. 1 schematisch dargestellt ist. Optional weist die Antriebsspindel 5 an einem ersten Ende 52 ein Anschlussprofil 53 zum Anschluss eines Drehwerkzeugs (nicht dargestellt) auf. Wie in Fig. 2 erkennbar, kann das Anschlussprofil 53 beispielsweise als Innensechskant realisiert sein.

Selbstverständlich sind auch andere Profilformen denkbar. Allgemein kann das Anschlussprofil 53 als Vertiefung ausgebildet sein, insbesondere mit einem nichtkreisförmigen Querschnitt.

Wie insbesondere in den Fign. 1 und 2 erkennbar ist, ist die Antriebsspindel 5 in Bezug auf die Hochrichtung H zwischen dem Basiskörper 2 und dem Tragkörper 3 angeordnet und erstreckt sich entlang der Längsrichtung L. Beispielsweise kann die Antriebsspindel 5 in der Längsausnehmung 24 des Basiskörpers 2 aufgenommen sein. Bei der in den Fign. 1, 2 und 4 beispielhaft dargestellten Verbindungseinrichtung 1 ist die Antriebsspindel 5 an dem Basiskörper 2 um eine Rotationsachse R5, die in der Längsrichtung L verläuft, drehbar und in Bezug auf die Längsrichtung L ortsfest gelagert. Zur Lagerung der Antriebsspindel 5 können beispielsweise Drehlager 7, 8 an dem Basiskörper 2 angebracht sein, wie dies in Fig. 1 rein schematisch dargestellt ist. Die Drehlager 7, 8 können die Antriebsspindel 5 beispielsweise an in Bezug auf die Längsrichtung L entgegengesetzten Endbereichen lagern. Wie in Fig. 2 erkennbar ist, ist die Antriebsspindel 5 in der Längsausnehmung 34 frei drehbar. An dem Tragkörper 3, beispielsweise an dessen Basiskörper 31, ist ein Innengewinde 51 ausgebildet, das mit dem Außengewinde 50 der Antriebsspindel 5 in Eingriff steht. Durch Drehen der Antriebsspindel 5, z.B. durch ein an dem optionalen Anschlussprofil 53 angreifendes Drehwerkzeug wie einem Sechskantschlüssel, kann der Tragkörper 3 relativ zu dem Basiskörper 2 entlang der Längsrichtung L verschoben bzw. verlagert werden. Fig. 4 zeigt beispielhaft eine Stellung des Tragkörpers 3 nach mehreren Drehungen der Antriebsspindel 5. Im Vergleich zu Fig. 1 wurde dadurch ein Abstand d1 entlang der Längsrichtung L zwischen dem Befestigungszapfen 20 und der Befestigungsstruktur 30 in einer im Vergleich zu der in Fig. 1 dargestellten Position vergrößert.

Alternativ zu der in Fig. 1 beispielhaft dargestellten Lagerung der Antriebsspindel 5 an dem Basiskörper 2 kann die Antriebsspindel 5 auch an dem Tragkörper 3 um die Rotationsachse R5 drehbar und in Bezug auf die Längsrichtung L ortsfest gelagert sein. Das Innengewinde 51, mit welchem das Außengewinde 50 der Antriebsspindel 5 in Eingriff steht, ist in diesem Fall an dem Basiskörper 2 ausgebildet, beispielsweise in der Längsausnehmung 24. Allgemein ist die Antriebsspindel 5 damit um die Rotationsachse R5 drehbar und ortsfest in Bezug auf die Längsrichtung an dem Basiskörper 2 oder an dem Tragkörper 3 gelagert, und an dem jeweils anderen von Tragkörper 3 und Basiskörper 2 ist ein Innengewinde 51 ausgebildet, mit dem das Außengewinde 50 der Antriebsspindel 5 in Eingriff steht.

Wie in Fig. 5 schematisch dargestellt ist, kann die Verbindungsvorrichtung 5 eine optionale Sicherungseinrichtung 6 aufweisen. In Fig. 5 ist beispielhaft eine als U-förmiger Bügel 60 realisierte Sicherungseinrichtung 6 dargestellt. Der Bügel 60 ist mit einem ersten Ende 61 lösbar an der Antriebsspindel 5 befestigbar. Beispielsweise kann das erste Ende 61 mit einem zu dem Querschnitt des optionalen Anschlussprofils 53 der Antriebsspindel 5 korrespondierenden Querschnitt realisiert sein. Ein zweites Ende 62 des Bügels 60 ist an dem Tragköper 3 oder dem Basiskörper 2, wie dies in Fig. 5 beispielhaft dargestellt ist, befestigt oder befestigbar. Dadurch wird ein Drehen der Spindel 5 um die Rotationsachse R5 verhindert. Anstelle eines Bügels 60 kann beispielsweise auch ein Stift (nicht dargestellt), der durch eine in einem Endbereich der Spindel 5 ausgebildete Durchgangsbohrung (nicht dargestellt) geschoben und in eine an dem Tragköper 3 oder dem Basiskörper 2 ausgebildete Aufnahme (nicht dargestellt) eingeführt wird, realisiert sein. Generell kann demnach eine von der Antriebsspindel 5 lösbare Sicherungseinrichtung 6 vorgesehen sein, welche die Antriebsspindel 5 drehfest mit dem Basiskörper 2 oder dem Tragkörper 3 koppelt.

In Fig. 2 ist die voranstehend beschriebene Verbindungsvorrichtung 1 als Teil eines Befestigungssystems 200 dargestellt. Das Befestigungssystem 200 weist eine Befestigungsschien 10 und die Verbindungsvorrichtung 1 auf. Fig. 3 zeigt in Ansicht (A) beispielhaft eine Draufsicht auf die Befestigungsschiene 10. In Ansicht (B) zeigt Fig. 3 außerdem eine Schnittansicht der Befestigungsschiene 10 entlang der in Ansicht (A) eingezeichneten Line Y-Y. Wie in Ansicht (A) von Fig. 3 gezeigt ist, erstreckt sich die Befestigungsschiene 10 in einer Schienenlängsrichtung L10 und weist eine Vielzahl von Öffnungen 11 auf. Die Öffnungen 11 sind jeweils kreisförmig mit einem Durchmesser d11 ausgebildet, der beispielsweise 20 mm betragen kann. Die Öffnungen 11 sind in der Schienenlängsrichtung L10 gleichmäßig zueinander beabstandet. Das heißt, jede der Öffnungen 11 ist zu einer in der Schienenlängsrichtung L10 folgenden Öffnung 11 um den gleichen Abstand a11 beabstandet. Der Abstand a11 kann beispielsweise 2,54 cm bzw. 1 Zoll betragen.

Wie in Ansicht (A) der Fig. 3 ferner schematisch dargestellt ist, sind jeweils in der Schienenlängsrichtung L10 aufeinander folgende Öffnungen 11 durch einen Befestigungsschlitz 12 verbunden. Die Schlitze 12 weisen jeweils eine konstante Breite d12 auf, welche kleiner ist als der Durchmesser d11 der Öffnungen 11. Beispielsweise kann die Breite d12 10 mm betragen.

Wie in Ansicht (B) von Fig. 3 beispielhaft dargestellt ist, kann die Befestigungsschiene 10 insbesondere als Hohlprofil realisiert sein. Die in Fig. 3 beispielhaft dargestellte Befestigungsschiene 10 weist einen Bodensteg 13 und einen Decksteg 14 auf, wobei der Bodensteg 13 und der Decksteg 14 Seitenstege 15, 16 verbunden sind. Wie in Fig. 3 erkennbar ist, sind die Öffnungen 11 und die Schlitze 12 in dem Decksteg 14 ausgebildet. Die Seitenstege 14 definieren zwischen sich einen entlang der Schienenlängsrichtung L10 durchgehend erstreckenden Aufnahmeraum 17, dessen Breite d17 größer oder gleich dem Durchmesser d11 der Öffnungen 11 ist, so dass im Bereich eines jeden Schlitzes 12 jeweils eine Hinterschneidung ausgebildet wird, wie dies in Ansicht (B) von Fig. 3 beispielhaft dargestellt ist. Grundsätzlich ist es auch denkbar, die Befestigungsschiene 10 ohne den Bodensteg 13 und weiterhin optional auch ohne die Seitenstege 15, 16 zu realisieren.

Wie in Fig. 2 beispielhaft dargestellt ist, kann die Verbindungsvorrichtung 1 an der Befestigungsschiene 10 befestigt werden, indem der Befestigungszapfen 20 des Tragkörpers 3 über eine der Öffnungen 11 der Befestigungsschiene 10 in einen sich von dieser Öffnung 11 aus erstreckenden Befestigungsschlitz 12 eingeführt wird. Bei den in den Fign. 1, 2 und 5 beispielhaft dargestellten Verbindungsvorrichtungen 1 ist der Befestigungszapfen 20 als ein Kopfbolzen realisiert. Der Kopf 22 kann in die Öffnung 11 eingesetzt werden bzw. durch die Öffnung 11 in den optionalen Aufnahmeraum 17 der Befestigungsschiene 11 eingeführt werden. Anschließend wird der Befestigungszapfen 20 in der Schienenlängsrichtung L10 verschoben, so dass der Schaft 21 in dem Schlitz 12 angeordnet ist. Aufgrund der kleineren Breite d12 des Schlitzes 12 im Vergleich zu dem Durchmesser d11 der Öffnung 11 ist der Befestigungszapfen 20 in dem Schlitz 12 in Bezug auf die Hochrichtung H befestigt. Allgemein kann der Befestigungszapfen 20 formschlüssig in dem Befestigungsschlitz 12 befestigt sein.

Fig. 6 zeigt beispielhaft eine schematische Schnittansicht im Bereich eines Bodens 103 einer Kabine 105 eines Luftfahrzeugs 100. Wie in Fig. 6 beispielhaft dargestellt, kann das Befestigungssystem 200 zur Befestigung von Passagiersitzen 110 verwendet werden. Selbstverständlich können auch andere Kabinenausrüstungsgegenstände K, wie z.B. ein Bord-WC 111 oder eine Trennwand 112, mittels des Befestigungssystems 200 befestigt werden.

Wie in Fig. 6 schematisch dargestellt ist, ist die Befestigungsschiene 10 an dem Boden 103 der Kabine 105 angebracht. Die Verbindungvorrichtung 1 ist an der Befestigungsschiene 10 befestigt. Bei der in Fig. 6 beispielhaft gezeigten Verwendung des Befestigungssystems 200 ist jeweils ein Passagiersitz 110 mit einem vorderen Standfuß 110A an einer Verbindungseinrichtung 1 und mit einem hinteren Standfuß 110B an einer weiteren Verbindungseinrichtung 1 befestigt. Insbesondere sind die Standfüße 110A, 110B jeweils an der Befestigungsstruktur 30 des Tragkörpers 3 der Verbindungsvorrichtung 1 befestigt. In Fig. 6 sind beispielhaft zwei entlang der Schienenlängsrichtung L10 beabstandet angeordnete Passagiersitze 110 dargestellt. Ein Abstand P zwischen den Passagiersitzen 110 kann insbesondere durch einen Abstand der Befestigungseinrichtungen 30, welche die vorderen Standfüße 110A der Passagiersitze 110 fixieren, definiert sein. In Fig. 6 sind die Positionen der Befestigungsschlitze 12 der Schiene 10, in welchen die Befestigungszapfen 20 der Verbindungseinrichtungen 1 angeordnet sind, symbolisch als Strichpunktlinien dargestellt. Wie in Fig. 6 erkennbar ist und anhand der Fign. 1 und 4 bereits erläutert wurde, kann der Abstand d1 zwischen Befestigungszapfen 20 und Befestigungsstruktur 30 der Verbindungseinrichtung 1 durch Verschieben des Tragkörper 3 relativ zum Basiskörper 2 verstellt werden. Wie in Fig. 6 ohne weiteres ersichtlich ist, kann auf diese Weise der Abstand P zwischen den Passagiersitzen 110 dadurch ebenfalls verstellt werden, insbesondere mit einer kleineren Schrittweite als dies durch die Positionen der Öffnungen 11 bzw. der Schlitze 12 vorgegeben ist.

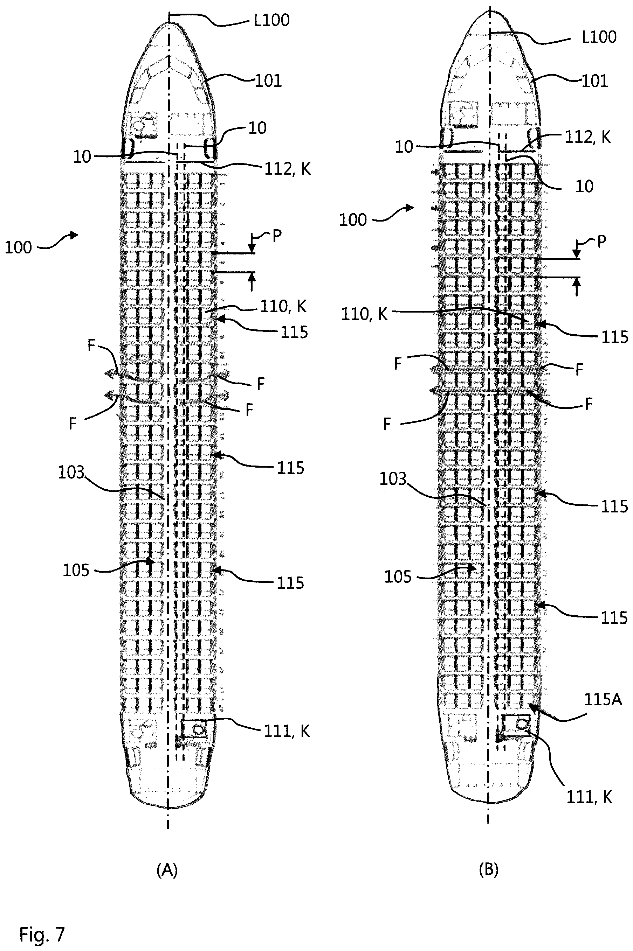

In Fig. 7 sind in den Ansichten (A) und (B) jeweils Schnittdarstellungen durch einen Rumpf 101 eines Luftfahrzeugs 100 dargestellt. Der Rumpf 101 definiert eine Luftfahrzeug-Längsachse L100. In Fig. 7 sind die Befestigungsschienen 10 des Befestigungssystems 200 symbolisch als gestrichelte Linien dargestellt. Wie in Fig. 7 rein beispielhaft gezeigt ist, können die Befestigungsschienen 10 insbesondere derart am Boden 103 der Kabine 105 angebracht sein, dass sie sich entlang der Luftfahrzeug-Längsachse L100 erstrecken. In Fig. 7 ist beispielhaft dargestellt, dass zwei Befestigungsschienen 10, sich parallel zueinander erstrecken.

In Ansicht (A) von Fig. 7 ist beispielhaft eine erste Anordnung von Kabineneinrichtungsgegenständen K in der Kabine 105 dargestellt. In einem vorderen Bereich der Kabine 105 ist eine Trennwand 112 über Verbindungseinrichtungen (nicht gezeigt) an den Befestigungsschienen 10 befestigt. In einem in Bezug auf die Luftfahrzeug-Längsachse L100 entgegengesetzt zu dem vorderen Bereich gelegenen hinteren Bereich der Kabine 105 ist eine Bord-Toilette 111 Verbindungseinrichtungen (nicht gezeigt) an den Befestigungsschienen 10 befestigt. Zwischen dem vorderen und dem hinteren Bereich ist eine Vielzahl von Sitzreihen 115 mit jeweils drei Passagiersitzen 110 angeordnet. Ein Passagiersitz 110 ist jeweils an zwei Befestigungsschienen 10 befestigt, insbesondere mittels einer Verbindungseinrichtung (nicht gezeigt). In dem in Ansicht (A) der Fig. 7 gezeigten Layout sind die Sitzreihen 115 mit einem Abstand P zueinander angeordnet, wie dies durch die Abstände a11 der Öffnungen 11 der Befestigungsschienen 10 vorgegeben ist. In einem mittleren Bereich der Kabine 105 sind im Bereich von Notausgängen jeweils zwei Reihen 115 mit im Vergleich zu den umliegenden Reihen 115 vergrößertem Abstand P zueinander vorgesehen, um hindernisfreie Fluchtwege F zu gewährleisten.

Ansicht (B) von Fig. 7 zeigt beispielhaft eine zweite Anordnung von Kabineneinrichtungsgegenständen K in der Kabine 105. Im Unterschied zu der in Ansicht (A) der Fig. 7 gezeigten ersten Anordnung sind in der zweiten Anordnung die Abstände P zwischen den Reihen 115, mit Ausnahme im Bereich der Fluchtwege F. Die Verwendung der voranstehend beschriebenen Verbindungseinrichtungen 1 ermöglicht eine Optimierung des Abstands P zwischen den Sitzreihen 115. Insbesondere kann der Abstand P um einen Betrag verringert werden, der kleiner als der Abstand d11 der Öffnungen 11 der Befestigungsschienen ist. Wie in Fig. 7 erkennbar ist, kann dies, bei gegebener Länge der Kabine 105 dazu führen, dass eine zusätzliche Sitzreihe 115A in der Kabine 105 untergebracht werden kann. Auf diese Weise wird der in der Kabine 105 verfügbare Platz effizienter genutzt.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Verbindungsvorrichtung
- 2: sonstwas
- 3: Tragkörper
- 3b: zweite Führungsfläche
- 4: Führungseinrichtung
- 5: Antriebsspindel
- 6: Sicherungseinrichtung
- 7, 8: Drehlager
- 10: Befestigungsschiene
- 11: Öffnungen
- 12: Befestigungsschlitze
- 13: Bodensteg
- 14: Decksteg
- 15, 16: Seitenstege
- 17: Aufnahmeraum
- 20: Befestigungszapfen
- 21: Schaft
- 22: Kopf
- 23: Basisabschnitt des Basiskörpers
- 30: Befestigungsstruktur
- 31: Basisabschnitt des Tragkörpers
- 32: Aufnahmebohrung
- 33: Rippe
- 34: Führungsabschnitt
- 41: Führungsprofil
- 41a: Führungsfläche
- 42: erste Führungsprofil
- 42a: erste Führungsfläche
- 50: Außengewinde
- 51: Innengewinde
- 52: erstes Ende der Antriebsspindel
- 53: Anschlussprofil
- 60: Bügel
- 100: Luftfahrzeug
- 103: Boden
- 105: Kabine
- 110: Passagiersitz
- 110A: vorderer Standfuß
- 110B: hinterer Standfuß
- 111: Bord-Toilette
- 112: Trennwand
- 115: Sitzreihe
- 115A: zusätzliche Sitzreihe
- 200: Befestigungssystem
- a11: Abstand benachbarter Öffnungen
- d1: Abstand zwischen Befestigungszapfen und Befestigungsstruktur entlang der Längsrichtung
- d11: Durchmesser der Öffnung
- d12: Breite des Befestigungsschlitzes
- d17: Breite des Aufnahmeraums
- d21: Durchmesser des Schafts
- d22: Durchmesser des Kopfs
- F: Fluchtweg
- H: Hochrichtung
- K: Kabineneinrichtungsgegenstand
- L: Längsrichtung
- L10: Schienenlängsrichtung
- L100: Luftfahrzeug-Längsachse
- R5: Rotationsachse

## Patentansprüche

1. Verbindungsvorrichtung (1) zur Befestigung eines Kabineneinrichtungsgegenstands (K) einer Kabine (105) eines Luftfahrzeugs (100) an einer Befestigungsschiene (10), mit:
einem Basiskörper (2), welcher einen Befestigungszapfen (20) zur Verbindung mit der Befestigungsschiene (10) aufweist;
einem Tragkörper (3) mit einer Befestigungsstruktur (30) zur Befestigung des Kabineneinrichtungsgegenstands (K);
einer Führungseinrichtung (4), welche den Tragkörper (3) und den Basiskörper (2) aneinander koppelt; und
eine zwischen dem Basiskörper (2) und dem Tragkörper (3) angeordnete Antriebsspindel (5), welche um eine sich in einer Längsrichtung (L) erstreckende Rotationsachse (R5) drehbar gelagert ist;
wobei die Antriebsspindel (5) ein Außengewinde (50) aufweist, welches mit einem an dem Basiskörper (2) oder mit einem an dem Tragkörper (3) ausgebildeten Innengewinde (51) in Eingriff steht.

2. Verbindungsvorrichtung (1) nach Anspruch 1, wobei die Antriebsspindel (5) an einem ersten Ende (52) ein Anschlussprofil (53) zum Anschluss eines Drehwerkzeugs aufweist.

3. Verbindungsvorrichtung (1) nach Anspruch 2, wobei das Anschlussprofil (53) als Vertiefung ausgebildet ist, insbesondere in Form eines Innensechskants.

4. Verbindungsvorrichtung (1) nach einem der voranstehenden Ansprüche, zusätzlich aufweisend:
eine von der Antriebsspindel (5) lösbare Sicherungseinrichtung (6), welche die Antriebsspindel (5) drehfest mit dem Basiskörper (2) oder dem Tragkörper (3) koppelt.

5. Verbindungsvorrichtung (1) nach einem der voranstehenden Ansprüche,
wobei der Tragkörper (3) als Befestigungsstruktur (30) eine oder mehrere der folgenden Strukturen aufweist:
einen Bolzen, einen Gewindestift, eine Aufnahmebohrung, eine Hülse, eine Rasteinrichtung, eine Klemmeinrichtung.

6. Verbindungsvorrichtung (1) nach einem der voranstehenden Ansprüche,
wobei der Befestigungszapfen (20) des Basiskörpers (2) einen Schaft (21) und einen Kopf (22), der einen größeren Durchmesser als der Schaft (21) aufweist, umfasst.

7. Verbindungsvorrichtung (1) nach einem der voranstehenden Ansprüche,
wobei die Führungseinrichtung (4) ein Führungsprofil (41; 42) mit einer sich entlang der Längsrichtung (L) erstreckenden ersten Führungsfläche (41a; 42a) aufweist, wobei das Führungsprofil (41; 42) an dem Tragkörper (3) oder dem Basiskörper (2) befestigt ist und die erste Führungsfläche (41a; 42a) des Führungsprofils (41; 42) an einer zweiten Führungsfläche (3b) des jeweils anderen von Basiskörper (2) und Tragkörper (3) anliegt.

8. Befestigungssystem (200) für eine Kabine (105) eines Luftfahrzeugs (100), mit
einer sich in einer Schienenlängsrichtung (L10) erstreckenden Befestigungsschiene (10), welche eine Vielzahl von in der Schienenlängsrichtung (L10) gleichmäßig zueinander beabstandeter Öffnungen (11) aufweist, wobei zwischen zwei aufeinander folgenden Öffnungen (11) jeweils ein Befestigungsschlitz (12) ausgebildet ist;
einer Verbindungsvorrichtung (1) gemäß einem der voranstehenden Ansprüche, wobei der Befestigungszapfen (20) des Tragkörpers (3) über eine der Öffnungen (11) der Befestigungsschiene (10) in einen diese Öffnung (11) mit einer weiteren Öffnung (11) verbindenden Befestigungsschlitz (12) einführbar ist.

9. Luftfahrzeug (100) mit einem Befestigungssystem (200) nach Anspruch 8,
wobei die Befestigungsschiene (10) an einem Boden (103) einer Kabine (105) des Luftfahrzeugs (100) angebracht ist.

10. Luftfahrzeug (100) nach Anspruch 9, wobei der Basiskörper (2) der Verbindungsvorrichtung (1) in dem Befestigungsschlitz (12) der Befestigungsschiene (10) befestigt ist, und wobei ein Kabineneinrichtungsgegenstand (K), an der Befestigungsstruktur (30) des Tragkörpers (3) der Verbindungsvorrichtung (1) befestigt ist.
